# EUROPÄISCHE PATENTSCHRIFT

(11) **EP 0 684 397 B1**
(45) Veröffentlichungstag und Bekanntmachung des Hinweises auf die Patenterteilung: **16.06.1999**
(21) Anmeldenummer: 95101013.1
(22) Anmeldetag: 26.01.1995
(51) Int. Cl.: F16C 3/06, F16C 3/10

(54) **Montageverfahren für einen insbesondere eine Verzahnung tragenden Körper an einer einteilig gefertigten, mehrfach gekröpften Kubelwelle einer Hubkolbenmaschine, vor allem Brennkraftmaschine**
Method of mounting an element, especially a toothed element on a one-piece crankshaft with multiple cranks of a reciprocating piston engine, especially an internal combustion engine
Montage d'un élément pouvant être denté sur un vilebrequin monopièce à plusieurs manetons d'un moteur à piston alternatif, en particulier moteur à combustion interne

(30) Priorität: 29.04.1994 DE 4415100
(43) Veröffentlichungstag der Anmeldung: 29.11.1995
(73) Patentinhaber: Bayerische Motoren Werke Aktiengesellschaft, 80788 München (DE)
(72) Erfinder: Eckert, Peter, D-81925 München (DE); Luchner, Clemens, D-81673 München (DE); Seeberger, Harald, D-82178 Puchheim (DE)

(56) Entgegenhaltungen:
- EP-A- 0 549 011
- DE-A- 1 933 155
- DE-A- 1 951 097
- DE-A- 2 935 384
- DE-C- 729 777
- DE-C- 4 311 108

## Beschreibung

Die Erfindung geht gemäß dem Oberbegriff des Patentanspruches 1 von der DE-A 29 35 384 aus.

Dieses Dokument zeigt und beschreibt eine einteilig gefertigte, mehrfach gekröpfte Kurbelwelle einer Brennkraftmaschine mit einem an einer Kurbelwange zentriert angeordneten und befestigten Zahnring für einen Kettentrieb. Der Durchmesser der Zentrierbohrung des Zahnringes ist hierbei so groß gewählt, daß der Zahnring zumindest von einem Kurbelwellenende her über sämtliche Zapfen und diese verbindenden Kurbelwangen geschoben werden kann zur Anordnung an der vorbestimmten Kurbelwange. Um den Zahnring über bestimmte Kurbelwangen schieben zu können, sind in diesem Abschnitt der Kurbelwelle erforderliche Ausgleichsgewichte mit einer jeweiligen Kurbelwange lösbar verbunden.

Nachteilig bei dieser Art der Montage des Zahnringes bzw. Zahnrades ist, daß dessen kleinster Innendurchmesser und damit auch kleinster Teilkreisdurchmesser im wesentlichen durch die Abmessungen der die Zapfen der Kurbelwelle verbindenden Wangenabschnitte bestimmt ist.

Der Erfindung liegt die Aufgabe zugrunde, das Montageverfahren für einen von der Kurbelwelle gesonderten, an der Kurbelwelle anordbaren Körper so zu verbessern, daß zumindest dessen für die Anordnung relevante Abmessungen im wesentlichen unabhängig von den Abmessungen der Kurbelwelle wählbar sind.

Diese Aufgabe wird gemäß dem Patentanspruch 1 gelöst, wobei der eine der Aufnahme zugeordnete Durchbrechung aufweisende Körper mittels Bruchtrennen zumindest in zwei Teile geteilt wird, und diese beiden Teile im Bereich des der Aufnahme benachbarten Lagerzapfens zu einem diesen umschließenden Körper vereinigt und miteinander fest verbunden werden, und dann der einteilige Körper verschoben und mittels der Aufnahme zentriert mit der Kurbelwange drehfest verbunden wird.

Mit dem erfindungsgemäßen Teilen des mit der Kurbelwelle umlaufenden bzw. mitdrehenden Körpers in seinem für die Kurbelwelle vorgesehenen Verbindungsbereich mittels des bekannten, spanlosen Bruchtrennens lassen sich die Abmessungen des Körpers vorteilhaft frei wählen, wobei mit dem Bruchtrennen weitere Nacharbeiten vorteilhaft vermieden sind.

Das erfindungsgemäße Montageverfahren wird in Ausgestaltung der Erfindung gemäß den weiteren Ansprüchen 2 und 4 für gezahnte Räder - Kettenräder; Zahnräder; Geber- oder Impulsräder - bevorzugt verwendet. Hierbei wird ein im wesentlichen scheibenförmiges, gezahntes Rad mit einer im Durchmesser gegenüber dem der Aufnahme - z.B. einem Zentrierbund - kleineren Bohrung gefertigt und im weiteren bruchgetrennt. Anschließend werden die hälftigen Zahnradteile im Bereich des dem Zentrierbund benachbarten Haupt-Lagerzapfens durch Schweißen, vorzugsweise Laser- oder Elektronenstrahlschweißen, miteinander fest verbunden. Das hierauf wieder einteilige Zahnrad wird mittels Pressitz oder einem temperaturbedingten Schrumpfsitz auf dem Zentrierbund drehfest mit der Kurbelwange bzw. der Kurbelwelle verbunden. Vorteilhaft im Hinblick auf das Laserschweißen sind die Zahnräder aus Einsatzstahl, die vor dem Bruchtrennen einsatzgehärtet werden. Weiter können die Zahn-/Kettenräder auch als Sinterteile ausgebildet sein.

Das erfindungsgemäße Verfahren ist anhand einer in der Zeichnung beispielhaft verdeutlichten Montage eines Kettenrades an der Wange einer Kurbelwelle beschrieben. Es zeigt
- Figur 1: abschnittsweise eine Kurbelwelle mit einem zu einem Hauptlagerzapfen koaxialen Zentrierbund an einer Wange zur Anordnung eines Kettenrades,
- Figur 2: das Kettenrad in Stirnansicht vor dem Bruchtrennen in hälftige Teile.

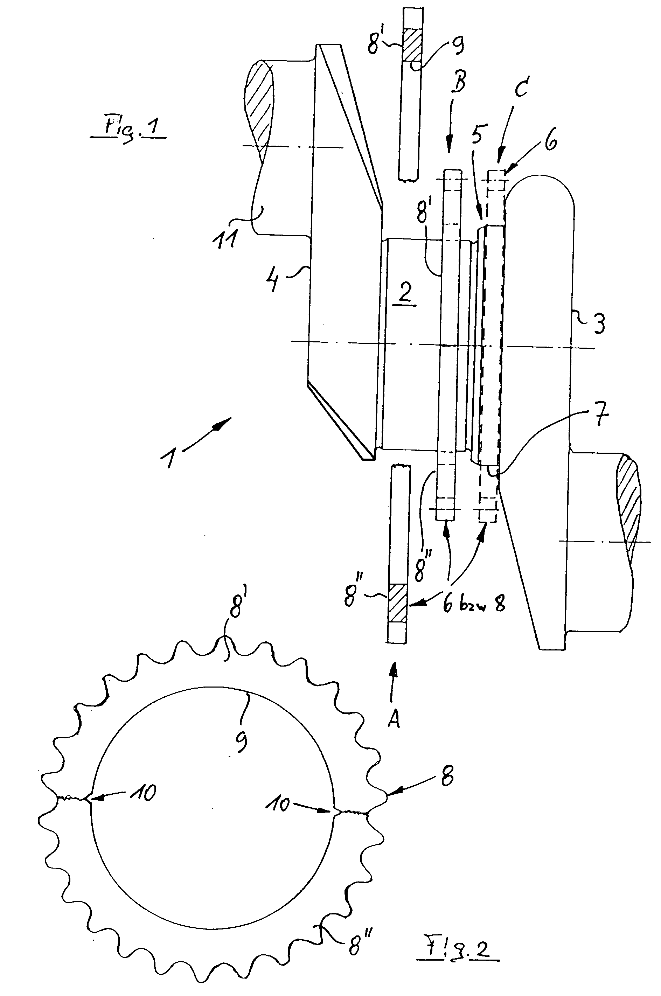

Eine einteilig gefertigte, mehrfach gekröpfte Kurbelwelle 1 weist an einer von zwei über einen Hauptlagerzapfen 2 verbundenen Kurbelwangen 3, 4 eine zapfenseitig angeordnete Aufnahme 5 für einen mit der Kurbelwelle 1 umlaufenden bzw. mitdrehenden Körper 6 auf. Die Aufnahme 5 ist als Zentrierbund 7 gestaltet für ein in Figur 2 näher gezeigtes Kettenrad 8 als Körper 6.

Das vorzugsweise aus einem Einsatzstahl gefertigte Kettenrad 8 umfaßt eine Zentrierbohrung 9, die im Durchmesser gegenüber dem des Zentrierbundes 7 um ein vorbestimmtes Maß kleiner gewählt ist. Weiter sind in der Zentrierbohrung 9 axial verlaufende, diametral angeordnete Kerben 10 vorgesehen, die in dem einsatzgehärteten Kettenrad 8 einer Einleitung der Bruchtrennung in hälftige Teile 8', 8" dienen. Zur Sicherstellung einer entweder in den Zahngründen oder in den Zahnköpfen außerhalb der tragenden Zahnflanken endenden Bruchtrennung kann das Kettenrad 8 zusätzlich zumindest an einer Stirnseite geschwächt sein.

Nachdem das einsatzgehärtete Kettenrad 8 in die hälftigen Teile 8', 8" gebrochen ist - Position A -, werden diese beiden Teile 8', 8" im Bereich des dem Zentrierbund 7 benachbarten Hauptlagerzapfens 2 zu einem diesen umschließenden Körper 6 vereinigt - Position B - und durch Schweißen, insbesondere durch Laserschweißen, fest miteinander verbunden.

Das wiederum einteilige Kettenrad 8 wird vorzugsweise im Bereich der Zentrierbohrung 9 stark erwärmt und anschließend in Position C verschoben. Das Kettenrad 8 wird mittels Schrumpfsitz auf dem Zentrierbund 7 mit der Kurbelwange 3 bzw. der Kurbelwelle 1 drehfest verbunden.

Als Körper 6 kann neben jeder Art von Zahnrad z.B. auch ein Ausgleichsgewicht vorgesehen sein. Weiter kann jeder vorgenannte Körper ein Sinter- oder Gußteil sein.

## Patentansprüche

1. Montageverfahren für einen insbesondere eine Verzahnung tragenden Körper an einer einteilig gefertigten, mehrfach gekröpften Kurbelwelle einer Hubkolbenmaschine, vor allem Brennkraftmaschine,
- wobei die Kurbelwelle (1) an einer von zwei über einen Lagerzapfen (2) verbundenen Kurbelwangen (3, 4) eine lagerzapfenseitig angeordnete Aufnahme (5 bzw. 7) aufweist zur Montage des mit der Kurbelwange (3) drehfest verbindbaren Körpers (6 bzw. 8), wobei die Aufnahme einen größeren Durchmesser als der Lagerzapfen aufweist,
dadurch gekennzeichnet,
- daß der eine der Aufnahme (5 bzw. 7) zugeordnete Durchbrechung (9) aufweisende Körper (6 bzw. 8) mittels Bruchtrennen zumindest in zwei Teile (8', 8'') geteilt wird,
- daß diese beiden Teile (8', 8'') im Bereich des der Aufnahme (5 bzw. 7) benachbarten Lagerzapfens (2) zu einem diesen umschließenden Körper (6 bzw. 8) vereinigt und miteinander fest verbunden werden,
- und dann der einteilige Körper (6 bzw. 8) verschoben und mittels der Aufnahme (5 bzw. 7) zentriert mit der Kurbelwange (3) drehfest verbunden wird.

2. Verfahren nach Anspruch 1, dadurch gekennzeichnet,
- daß der Körper (6) als ein im wesentlichen scheibenförmiges, gezahntes Rad (Kettenrad 8) mit einer im Durchmesser gegenüber dem der Aufnahme (5 bzw. Zentrierbund 7) kleineren Bohrung (9) gefertigt und im weiteren bruchgetrennt wird,
- daß die beiden Zahnradteile (8', 8'') durch Schweißen miteinander fest verbunden werden, und
- daß dann das wieder einteilige Zahnrad (8) mittels Press- oder Schrumpfsitz auf dem Zentrierbund (7) drehfest mit der Kurbelwange (3) bzw. der Kurbelwelle (1) verbunden wird.

3. Verfahren nach Anspruch 1 und 2, dadurch gekennzeichnet,
- daß das Zahnrad (Kettenrad 8) aus einem Einsatzstahl gefertigt und vor dem Bruchtrennen einsatzgehärtet wird, und
- daß die Teile (8', 8'') des bruchgetrennten Zahnrades (8) durch Laser- oder Elektronenstrahl-Schweißen miteinander fest verbunden werden.

4. Verfahren nach Anspruch 1 und 2, dadurch gekennzeichnet, daß das Zahnrad (Kettenrad 8) als Sinterteil aus einem ggf. legierten Stahlpulver gefertigt wird.

## Claims

1. A method of fitting a body, especially toothed, on a one-part multi-throw crankshaft of a reciprocating engine, especially an internal combustion engine,
- wherein the crankshaft (1) has a holder (5 or 7) on one out of two crank webs (3, 4) connected via a journal pin (2), and disposed on the same side as the pin, for fitting the body (6 or 8) so as to be connected to and rotating integrally with the crank web (3), wherein the holder has a greater diameter than the journal pin,
characterised in that
- the body (6 or 8), which has an aperture (9) associated with the holder (5 or 7), is divided by fracture into at least two parts (8', 8"),
- the two parts (8', 8"), in the region of the journal pin (2) adjoining the holder (5 or 7), are joined to form a body (6 or 8) surrounding the pin and are firmly connected to one another,
- after which the single-part body (6 or 8) is slid and sintered by the holder (5 or 7) and joined to the crank web (3) so as to rotate integrally therewith.

2. A method according to claim 1, characterised in that
- the body (6) is produced in the form of a substantially disc-shaped toothed wheel (chain wheel 8) with a bore (9) having a diameter smaller than that of the holder (5 or centring collar 7) and is then separated by fracture,
- the two parts (8', 8") of the toothed wheel are firmly joined together by welding, and
- the toothed wheel (8), now again in one piece, is connected by a force or shrink fit on the centring collar (9) so as to rotate integrally with the crank web (3) or crankshaft (1).

3. A method according to claims 1 and 2, characterised in that
- the toothed wheel (chain wheel 8) is made of case-hardening steel and is case-hardened before separation by fracture, and
- the parts (8', 8") of the toothed wheel (8) separated by fracture are firmly joined together by laser or electron-beam welding.

4. A method according to claims 1 and 2, characterised in that the toothed wheel (chain wheel 8) is made in the form of a sintered part from steel powder, optionally alloyed.

## Revendications

1. Procédé de montage notamment d'un élément portant une denture sur un vilebrequin à plusieurs coudes, fabriqué en une seule pièce, pour un moteur à piston linéaire notamment un moteur à combustion interne,
selon lequel :
• le vilebrequin (1) est monté sur un moyen de réception (5, 7) du côté du maneton de palier, sur l'une des deux joues de vilebrequin (3, 4) reliées par un maneton, pour le montage du corps (6, 8) relié solidairement en rotation à la joue de vilebrequin (3), le moyen de réception ayant un diamètre plus grand que celui des manetons,
caractérisé en ce que
• l'élément (6, 8) ayant un passage (9) pour être reçu sur le moyen de réception (5, 7), est divisé en au moins deux parties (8', 8") par rupture,
• les deux parties (8', 8") sont réunies au niveau du maneton (2) voisin du moyen de réception (5, 7) pour former un corps (6, 8) entourant celui-ci, et sont reliées solidairement l'une à l'autre,
• et alors l'élément (6, 8) en une seule pièce est glissé pour être centré par le moyen de réception (5, 7) et être relié solidairement en rotation à la joue de vilebrequin (3).

2. Procédé selon la revendication 1,
caractérisé en ce que
• l'élément (6) est une roue dentée (roue à chaîne 8) essentiellement en forme de disque, avec un perçage (9) plus petit en diamètre que celui du moyen de réception (5) ou collerette de centrage (7) et est divisée par rupture,
• les deux parties de roue dentée (8', 8") sont reliées solidairement par soudure,
• puis la roue dentée (8) de nouveau en une seule pièce est reliée par un siège pressé ou frété sur la collerette de centrage (7), pour être reliée solidairement en rotation à la joue (3) de vilebrequin ou au vilebrequin (1).

3. Procédé selon les revendications 1 et 2,
caractérisé en ce que
• la roue dentée (voie chaîne 8) est fabriquée en acier cémentée et est traitée avant la séparation par rupture,
• les parties (8', 8") de la roue dentée séparée par rupture sont de nouveau soudées par une soudure au laser ou une soudure à faisceaux électroniques.

4. Procédé selon les revendications 1 et 2,
caractérisé en ce que
la roue dentée (ou la roue à chaîne 8) est une pièce frittée fabriquée à partir d'une poudre d'acier le cas échéant alliée.
